Europäisches Patentamt

European Patent Office

Office européen des brevets

(19)

(11) EP 1 167 414 A1

## (12) EUROPEAN PATENT APPLICATION

(43) Date of publication:
02.01.2002 Bulletin 2002/01

(51) Int Cl.$^7$: **C08G 18/40**, C08G 18/48

(21) Application number: 00113735.5

(22) Date of filing: 29.06.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **HUNTSMAN INTERNATIONAL LLC Salt Lake City, Utah 84108 (US)**

(72) Inventor: **The designation of the inventor has not yet been filed**

(74) Representative: **Swinnen, Anne-Marie Huntsman ICI (Europe) BVBA, Huntsman Polyurethanes, Intellectual Property Dept., Everslaan 45 3078 Everberg (BE)**

### (54) Process for making rigid polyurethane foams having high adhesion

(57) Use, in a water-blown rigid polyurethane or urethane-modified polyisocyanurate foam, of a polyalkyleneoxydiol having an OH value of 100 to 600 mg KOH/g, where the diol represents from 0.1 to 20% by weight of the foam weight, for improving the adhesion.

EP 1 167 414 A1

**Description**

This invention relates to a process for the preparation of rigid polyurethane or urethane-modified polyisocyanurate foams, to foams prepared thereby, and to novel compositions useful in the process. The foams have high adhesion to facing materials.

Rigid polyurethane and urethane-modified polyisocyanurate foams are in general prepared by reacting the appropriate polyisocyanate and isocyanate-reactive compound (usually a polyol) in the presence of a blowing agent. One use of such foams is as a thermal insulation medium as for example in the construction of refrigerated storage devices. The thermal insulating properties of rigid foams are dependent upon a number of factors including, for closed cell rigid foams, the cell size and the thermal conductivity of the contents of the cells, the type of fire retardant if any is used, the amount thereof, etc.

Currently, there is a trend towards foams that are free of fire retardants. Most of the fire retardants are halogenated; especially bromine-containing additives are now under environmental pressure. Further, it is known that reduced fire retardant content would also give reduced smoke generation during burning, an issue of increasing importance.

Thus, there is a trend towards foams that would have intrinsic fire retardant properties; these foams are known as polyisocyanurate rigid foams (PIR foams) (as opposed to "traditional" polyurethane rigid foams also known as PUR foams). These PIR foams are obtained at a high NCO index, especially above 150. In the manufacture of these foams are currently used physical blowing agents. Halogenated blowing agents, although providing good results, are now also under environmental pressure: this is especially true for CFC's (chlorofluorocarbons). Alternative physical blowing agents are HCFC's (hydrochlorofluorocarbons), HFC's (hydrofluorocarbons) and HC's (hydrocarbons). Since these blowing agents, with the exception of HC's, still contain halogen, they still suffer from the same drawbacks; further the HC's are highly flammable substances and hence cause safety problems. The "ideal" blowing agent, especially for use in PIR foams, would then be water.

Water-blown PUR and PIR foams (collectively referred to as polyurethane foams) however suffer from major drawbacks. They exhibit poor adhesion, especially to metal (which can also be seen with other blowing agents such as hydrocarbons in, e.g., PIR foams), poor friability and surface brittleness. These phenomena are even more acute at high NCO index.

Attempts to solve these problems have been to use a polyol used in the field of flexible polyurethane foams.

US-P-5,070,115 and US-P-5,350,780 disclose a process for preparing rigid foams having improved adhesion comprising reacting a polyisocyanate with (i) a polyester polyol having a functionality of at least 2 and an OH value of at least 150 and/or a polyether polyol having a functionality of at least 2 and an OH value of at least 200 and (ii) a polyoxyalkylenepolyol having a functionality of at least 2 and an OH value below 100. US-P-5,418,258, to the same assignee, discloses a prepolymer of a polyisocyanate with said polyoxyalkylenepolyol having a functionality of at least 2 and an OH value below 100. NCO index actually disclosed is below 150 in all three US patents.

US-P-5,494,942 discloses a process similar to the one of US-P-5,418,258; the prepolymer being obtained starting from polymeric MDI and a polyoxyalkylenepolyol having a functionality of at least 2 and a molecular weight of at least 2,000 (which for a functionality of 2 corresponds to an OH value below 56). The NCO index actually disclosed is also below 150 in this US patent.

WO-A-98/33832 discloses a specific polyol mixture, comprising a major part of a polyether and/or polyester polyol (with OH values ranging from 200 to 2,000) and a minor part of a polyolefin polyol (with OH values preferably below 100). Adhesion to polyethylene is said to be improved.

These solutions however exhibit also drawbacks. First, the amount of flexible polyol needed to achieve a noticeable effect is quite high. Secondly, these polyols are rather expensive. Last, it may happen that the two types of polyols (rigid and flexible) are subject to phase separation.

There is thus a need towards foam compositions that (i) would allow water as a blowing agent, (ii) without resort to a high molecular weight flexible polyol, (iii) while providing good adhesion of the foam to facing material, especially metal, (iv) while at the same time preserving compression strength and also enhancing other features such as friability, and (v) while at the same time providing foams with very good insulating and physical properties.

These objects are met by using in the process of making rigid polyurethane or urethane-modified polyisocyanurate foam, a polyalkyleneoxydiol having an OH value of 100 to 600 mg KOH/g, where the diol represents from 0.1 to 20% by weight of the foam weight.

The foams of the invention also are preferably of the closed cell type.

The instant invention is based on the surprising effect that this specific diol provides an improved adhesion of the foam to the facing material, especially in case of PIR foams.

The diol that is used in the invention is a polyalkyleneoxydiol. It is preferably comprised of ethyleneoxy and/or propyleneoxy units. More preferably, the ethyleneoxy mol content is at least 50%, advantageously at least 75%, more preferably 100%, based on the total oxyalkylene units present.

The preferred diol for use in the invention is PEG (polyethyleneglycol) as well as PPG (polypropyleneglycol).

While the OH value of the diol generally ranges from 100 to 600 mg KOH/g, it is preferably below 500 mg KOH/g and most preferably between 150 and 400 mg KOH/g.

PEG 600, PEG 300 and PEG 400 (PEG having molecular weights of 600, 300 and 400, respectively) are well suited for the invention purposes.

The content of the diol is generally from 0.1 to 20 % by weight of the foam, preferably from 1 to 15 %, most preferably from 2 to 10 %. The amounts of diol used are higher in case of high NCO index.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Further suitable polyisocyanates for use in the process of the invention are those described in EP-A-0320134. Modified polyisocyanates, such as carbodiimide or uretonimine modified polyisocyanates can also be employed.

Still other useful organic polyisocyanates are isocyanate-terminated prepolymers prepared by reacting an excess organic polyisocyanate with a minor amount of an active hydrogencontaining compound. Preferred polyisocyanates to be used in the present invention are the polymeric MDI's.

The further isocyanate-reactive compounds that can be used in combination with the specific diol of the invention are those traditionally used in the art (they will be referred to as "major polyol"). They can be generally disclosed as being a polyol having a functionality of at least 2 and an OH value above 100 mg KOH/g. Suitable major polyols to be used in the process of the present invention include any of those known in the art for the preparation of rigid polyurethane or urethane-modified polyisocyanurate foams. Of particular importance for the preparation of rigid foams are polyols and polyol mixtures having average hydroxyl numbers above 100, preferably from 300 to 1000, especially from 200 to 700 mg KOH/g, and hydroxyl functionalities of from 2 to 8, especially from 2.5 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example diethyleneglycol (DEG), glycerol, trimethylolpropane, triethanolamine, pentaerythritol, sorbitol and sucrose; polyamines, for example diethanolamine (DELA), ethylene diamine (EDA), tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl-terminated polythioethers, polyamides, polyesteramides, polycarbonates, polyacetals, polyolefins and polysiloxanes. Polyether polyols, especially amine-initiated, and polyester polyols, especially aromatic polyester polyols, are preferred.

It has to be understood that mixtures of major polyols are encompassed as well. Specific mixtures encompass polyether polyols mixtures, polyester polyols mixtures and polyether polyols and polyester polyols mixtures.

For example, one major polyol may be:

a mixture of two or more polyether polyols; or
a mixture of at least one polyether polyol and at least one polyester polyol.

One preferred mixture is one in which the polyether polyol is an amine-initiated polyol and/or the polyether polyol is an aromatic polyol.

In these mixtures, the preferred weight ratio first polyether polyol to second polyether polyol can be comprised between 1 and 3, while the preferred weight ratio polyether polyol to polyester polyol can be comprised between 1 and 3.

The functionality of the polyol blend can vary within the broad limits indicated above; preferably the average functionality is from 2 to 4.5.

In addition to the above-mentioned polyols, it is also possible to use any of the known flexible polyols (polyols used for making flexible foams) that are traditionally used to impart adhesion.

The quantities of the polyisocyanate compositions and the polyfunctional isocyanate-reactive compositions (incl. the diol of the invention) to be reacted will depend upon the nature of the rigid polyurethane or urethane-modified polyisocyanurate foam to be produced and will be readily determined by those skilled in the art. The NCO index as used herein, is the ratio of NCO-groups over isocyanate-reactive hydrogen atoms (including water) present in a formulation, given as a percentage:

$$\frac{[NCO] \times 100}{[active\ hydrogen]}\ (\%)$$

In general the NCO index is higher than 100 %, especially above 130 %, particularly above 150 % and preferably between 150 and 300 %. Higher indexes up to 500 %, and even higher, are also contemplated.

Any type of blowing agent known for the manufacture of rigid PUR or PIR foams can be used in the instant invention. As blowing agent, one can use water, hydrocarbons, hydrofluorocarbons, dialkyl ethers, cycloalkylene ethers and ketones, fluorinated ethers, perfluorinated hydrocarbons, and hydrochlorofluorocarbons (e.g. 1-chloro-1,2-difluoroethane, 1-chloro-2,2-difluoroethane, 1-chloro-1,1-difluoroethane, 1,1-dichloro-1-fluoroethane and monochlorodifluoromethane).

Preferably, water is used as the chemical blowing agent. The amount of water used in the foam of the invention is generally between 0.1 and 25 % by weight, preferably between 1 and 10 % by weight, based on the total foam weight.

In a preferred embodiment of the invention water is used as the sole blowing agent. The amount of water is then generally between 1 and 10 % by weight, preferably between 1 and 5 % by weight based on the total foam weight.

In addition to water, other chemical blowing agents can be used, as well as other physical blowing agents (especially of the hydrocarbon and hydrofluorocarbon series, such as depicted below). These co-blowing agents represent up to 50%, preferably up to 25% of the expansion of the foam, when the foam is mainly water-blown.

Suitable physical blowing agents include hydrocarbons, hydrofluorocarbons, as well as others.

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above. Preferred hydrocarbons are n-butane, iso-butane, cyclopentane, n-pentane and isopentane and any mixture thereof.

Suitable hydrofluorocarbon blowing agents include lower aliphatic or cyclic, linear or branched hydrocarbons such as alkanes, alkenes and cycloalkanes, preferably having from 2 to 8 carbon atoms, which are substituted with at least one, preferably at least three, fluorine atom(s). Specific examples include 1,1,1,2-tetrafluoroethane (HFC 134a), 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane, 1,1,3,3,3-pentafluoropropane (HFC 245fa) and 1,1,1,3,3-pentafluoro-n-butane. The preferred hydrofluorocarbons are HFC 134a and HFC 245fa.

The total quantity of blowing agent to be used in a reaction system for producing cellular polymeric materials will be readily determined by those skilled in the art, but will typically be from 1 to 25 % by weight based on the foam weight. This quantity of blowing agent is in general such that the resulting foam has the desired bulk density which is generally in the range of 15 to 70 kg/m$^3$, preferably 20 to 50 kg/m$^3$, most preferably 25 to 45 kg/m$^3$.

When a blowing agent has a boiling point at or below ambient it is maintained under pressure until it is mixed with the other components. Alternatively, it can be maintained at subambient temperatures until mixed with the other components.

In addition to the polyisocyanate and polyfunctional isocyanate-reactive compositions and the blowing agents, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, foam-stabilizing agents or surfactants, for example siloxane-oxyalkylene copolymers, urethane catalysts, for example tin compounds such as stannous octoate or dibutyltin dilaurate or tertiary amines such as dimethylcyclohexylamine or triethylene diamine, isocyanurate catalysts, fire retardants, for example halogenated alkyl phosphates such as tris chloropropyl phosphate, fillers such as carbon black, cell size regulators such as insoluble fluorinated compounds. The use of such additives is well known to those skilled in the art.

In operating the process for making rigid foams according to the invention, the known one-shot, prepolymer or semi-prepolymer techniques may be used together with conventional mixing methods and the rigid foam may be produced in the form of slabstock, moldings, cavity fillings, sprayed foam, frothed foam or laminates with other materials such as hardboard, plasterboard, plastics, paper or metal.

According to one embodiment, the invention is carried out according to the one-shot technique, all polyols being in the isocyanate-reactive composition.

According to a second embodiment, the invention is carried out according to the prepolymer technique, the polyisocyanate being first reacted with a part, preferably all of the diol.

It is also possible to have the diol of the invention in both the prepolymer and the isocyanate-reactive composition, if needed.

It is convenient in many applications to provide the components for polyurethane production in pre-blended formulations based on each of the primary polyisocyanate and isocyanate-reactive components. In particular, many reaction systems employ a polyisocyanate-reactive composition, which contains the major additives such as the blowing agent and the catalyst in addition to the isocyanate-reactive component or components.

Therefore the present invention also provides an isocyanate-reactive composition comprising the present mixture of the specific polyol(s) and the blowing agent (preferably water). The amount of diol is generally between 1 and 80 %, preferably between 5 and 50 %, most preferably between 10 and 30 % by weight based on the isocyanate-reactive composition.

The various aspects of this invention are illustrated, but not limited by the following examples.

The following reaction components are referred to in the examples, in which:

Polyol 1: Sucrose initiated polyether polyol, $F_n$ is 2.4, OH value is 160 mg KOH/g.
Polyol 2: Sorbitol initiated polyether polyol, $F_n$ is 5.5, OH value is 460 mg KOH/g.
Polyol 3: Sucrose initiated polyether polyol, $F_n$ is 3.96, OH value is 570 mg KOH/g.
Polyol 4: DADPM initiated polyether polyol, $F_n$ is 3.6, OH value is 310 mg KOH/g.
Polyol 5: Sorbitol polyether polyol, $F_n$ is 5.66, OH value is 340 mg KOH/g.
Polyol 6: Voranol RA 800, an EDA initiated polyether polyol, commercially available from Dow.
Polyol 7: Isoexter 4531, an aliphatic polyester polyol, commercially available from Coim.
Polyol 8: Stepanpol 2352, an aromatic polyester polyol, commercially available from Stepan.
Polyol 9: TDA initiated polyether polyol, $F_n$ is 4, OH value is 350 mg KOH/g.
PEG600: polyethyleneglycol, $F_n$ is 2, OH value is 187 mg KOH/g.
PEG300: polyethyleneglycol, $F_n$ is 2, OH value is 374 mg KOH/g.
Tegostab B 8406: Silicone surfactant from Goldschmidt.
Niax A1: Amine catalyst from Union Carbide.
Polycat 43: trimerisation catalyst from Air Products.
SFC: Dimethylcyclohexylamine catalyst.
SFB: Dimethylbenzylamine catalyst.
Dabco K15: trimerisation catalyst from Air Products.
Isocyanate: Polymeric MDI, $F_n$ is 2.85, NCO value is 30.5.
Ixol B251: Brominated fire retardant from Solvay.
TCPP: Trichloropropylphosphate, fire retardant
TCEP: Trichloroethylphosphate, fire retardant
TEP: Triethylphosphate, fire retardant
DEEP: Diethylethylphosphonate, fire retardant
DMMP: Dimethylmethylphosphonate, fire retardant

Example 1: PIR Example

After mixing the polyols and non-reactive components, the polyol blend and the polyisocyanate are poured together and the properties evaluated on a handmix foam. Chemicals are mixed at 2,000 rpm for 5 seconds. Reactivity and free rise density was checked on a cup foam; for evaluation of other physical properties, free rise blocks of 20x20x30 cm were made.

The following table indicates the composition.

Table 1

| Formulation | Ref. Ex | Ex. A | Ex. B | Ex. C |
|---|---|---|---|---|
| Polyol 1 | 20 | 20 | 20 | 20 |
| Polyol 3 | 56.8 | 56.8 | 56.8 | 56.8 |
| PEG600 | - | 11 | 24 | 55 |
| B 8406 | 4 | 4 | 4 | 5 |
| Niax A1 | 0.13 | 0.13 | 0.13 | 0.13 |
| SFC | 1.2 | 1.2 | 1.3 | 1.4 |
| Dabco K15 | 3.0 | 3.0 | 3.2 | 3.5 |
| Water | 4.7 | 4.8 | 5.4 | 5.6 |

Table 1   (continued)

| Formulation | Ref. Ex | Ex. A | Ex. B | Ex. C |
|---|---|---|---|---|
| Isocyanate | 326 | 339 | 369 | 405 |
| Index | 200 | 200 | 200 | 200 |

The results are summarized in the next table. Tests are performed at room temperature. The various standards for measuring the characteristics are given below:

| | |
|---|---|
| Reactivity | ISO 845 |
| Closed Cell Content | ASTM D 2856 |
| Compression strength (NMCS stands for Normalized Mean Compression Strength) | DIN 53421 |
| Friability | BS 4370 method 12 |
| DIM VAC | method described by D. Daems, I.D. Rosbotham, Utech 94, The Hague, The Netherlands, Paper 18 (1994). |
| B2 test | DIN 4102 |
| Adhesion | See below |

Adhesion is measured according to the following method. The force required for a given width of 5 cm of paper liner (Al/Kraft/PE coated) is measured on the contact face in an early stage of the foam making and after 24-hrs cure. All experiments are performed at room temperature. An Instron apparatus is used. By using the above liner, an adhesion of more than 100 N/m indicates that the foam will exhibit good adhesion also to metal.

Table 2

| | Ref. Ex | Ex. A | Ex. B | Ex. C |
|---|---|---|---|---|
| Reactivity (sec) | | | | |
| Cream time | 9 | 9 | 8 | 8 |
| Full Cup | 22 | 20 | 22 | 19 |
| String time | 32 | 34 | 34 | 32 |
| Tack Free Time | 60 | 60 | 65 | 60 |
| End Of Rise | 60-65 | 70 | 80 | 65 |
| Density (kg/m$^3$) | 36 | 37.5 | 36 | 37.9 |
| Closed Cell Content (%) | 90 | 89 | 87 | 87 |
| Compression strength (kPa) NMCS (OD of 36 kg/m$^3$) | 198 | 180 | 164 | 155 |
| Friability (%) | 24 | 13.5 | 18.7 | 12.4 |
| Early Adhesion (N/m) | | | | |
| 5 min | 10 | 17 | 36 | 18 |
| 6 min | 20 | 40 | 60 | 104 |
| 7 min | 46 | 42 | 63 | 207 |
| 8 min | 20 | 40 | 92 | 353 |
| 9 min | 12 | 40 | 34 | 395 |
| 10 min | 12 | 25 | 26 | 416 |
| Final Adhesion (N/m) | 50 | 50 | 110 | 350 |

Example 2: PIR Example

The following table indicates the composition. The prepolymer is manufactured as follows. The isocyanate is charged and heated to about 60°C. PEG600 is added over a period of 30 min. The weight ratio isocyanate:PEG is 95:

5. NCO value of this prepolymer is 28.5.

Table 3

| Formulation | Ref. Ex | Ex. D | Ex. E |
|---|---|---|---|
| Polyol 1 | 20 | 20 | 20 |
| Polyol 4 | 45 | 45 | 45 |
| Polyol 8 | 32.5 | 32.5 | 32.5 |
| PEG600 | - | 15 | - |
| B 8406 | 4 | 4 | 4 |
| Niax A1 | 0.13 | 0.13 | 0.13 |
| SFC | 0.73 | 0.73 | 0.73 |
| Dabco K15 | 2.75 | 2.75 | 2.75 |
| Water | 3.9 | 4.1 | 4.1 |
| Isocyanate | 247 | 267 | - |
| Isocyanate/PEG600 Prepolymer* | - | - | 273 |
| Index | 200 | 200 | 200 |

* equivalent to 15 parts of PEG600 in the resin side

The results are summarized in the next table.

Table 4

| | Ref. Ex | Ex. D | Ex. E |
|---|---|---|---|
| Reactivity (sec) | | | |
| Cream time<br>Full Cup<br>String time<br>Tack Free Time<br>End Of Rise | 8<br>22<br>30<br>60<br>60 | 9<br>23<br>35<br>65<br>60 | 7<br>22<br>34<br>60<br>65 |
| Density (kg/m$^3$) | 37.8 | 38 | 37 |
| Closed Cell Content (%) | 89 | 90 | 89 |
| Compression strength (kPa)<br>NMCS (OD of 36 kg/m$^3$) | 195 | 187 | 198 |
| Friability (%) | 13 | 10 | 5 |
| Early Adhesion (N/m) | | | |
| 5 min<br>6 min<br>7 min<br>8 min<br>9 min<br>10 min | 33<br>66<br>94<br>122<br>70<br>50 | 9<br>37<br>99<br>150<br>200<br>233 | 34<br>68<br>108<br>154<br>160<br>209 |
| Final Adhesion (N/m) | 90-100 | 200 | 280 |

Example 3: PIR Example

The following table indicates the composition.

Table 5

| Formulation | Ex. F | Ex. G |
|---|---|---|
| Polyol 1 | 20 | 20 |
| Polyol 4 | 45 | - |
| Polyol 9 | - | 45 |
| Polyol 8 | 32.5 | 32.5 |
| PEG300 | 21 | 21 |
| TEP | 21 | 21 |
| B 8406 | 6 | 6 |
| Niax A1 | 0.1 | 0.1 |
| SFB | 2 | 2 |
| Dabco K15 | 1.14 | 1.14 |
| Water | 4.7 | 4.7 |
| Isocyanate | 306.2 | 316.1 |
| Index | 200 | 200 |

The results are summarized in the next table.

Table 6

| | Ex. F | Ex. G |
|---|---|---|
| Reactivity (sec) | | |
| Cream time | 15 | 15 |
| Full Cup | 47 | 54 |
| String time | 60 | 75 |
| Tack Free Time | - | - |
| End Of Rise | - | - |
| Density (kg/m$^3$) | 41.5 | 42 |
| Closed Cell Content (%) | 91 | 89 |
| Compression strength (kPa) NMCS (OD of 36 kg/m$^3$) | 166 | 194 |
| Early Adhesion (N/m) | | |
| 5 min | 10 | 27 |
| 6 min | 40 | 150 |
| 7 min | 90 | 180 |
| 8 min | 140 | 230 |
| 9 min | 170 | 280 |
| 10 min | 236 | 300 |
| Dim Vac (%) | | |
| length | -7.33 | -1.70 |
| width | -8.43 | -1.40 |
| thickness | 1.19 | 1.09 |

From the above tables, it can be seen that adhesion is good. It should be borne in mind that the adhesion test is carried out at room temperature, which is a severe test (in most cases, heat is applied to the foam panel, e.g.

60°C for 10 minutes). In case of applied heat, the foams of the invention also exhibit higher adhesion than the reference foams. The foams of the present invention even exhibit better adhesion at room temperature than the reference foams at elevated temperatures.

Example 4: PIR Example

The following table indicates the composition.

Table 7

| Formulation | Ref. Ex. | Ex. H | Ex. I | Ex. J | Ex. K | Ex. L |
|---|---|---|---|---|---|---|
| Polyol 1 | 20 | 20 | 20 | 20 | 20 | 20 |
| Polyol 4 | 45 | 45 | 45 | 45 | 45 | 45 |
| Polyol 8 | 32.5 | 32.5 | 32.5 | 32.5 | 32.5 | 32.5 |
| PEG300 | 21 | 21 | 21 | 21 | 21 | 21 |
| TCPP | - | 12.6 | - | - | - | - |
| TCEP | - | - | 12.6 | - | - | - |
| DEEP | - | - | - | 12.6 | - | - |
| TEP | - | - | - | - | 12.6 | - |
| DMMP | - | - | - | - | - | 12.6 |
| B 8406 | 6 | 6 | 6 | 6 | 6 | 6 |
| Niax A1 | 0.1 | 0.1 | 0.1 | 0.1 | 0.1 | 0.1 |
| SFB | 2 | 2 | 2 | 2 | 2 | 2 |
| Dabco K15 | 1.14 | 1.14 | 1.14 | 1.14 | 1.14 | 1.14 |
| Water | 4.7 | 4.7 | 4.7 | 4.7 | 4.7 | 4.7 |
| Isocyanate | 306.2 | 306.2 | 306.2 | 306.2 | 306.2 | 306.2 |
| Index | 200 | 200 | 200 | 200 | 200 | 200 |

The results are summarized in the next table.

Table 8

| | Ref. Ex. | Ex. H | Ex. I | Ex. J | Ex. K | Ex. L |
|---|---|---|---|---|---|---|
| Compression strength (kPa) NMCS (OD of 44 kg/m$^3$) | 222 | 224 | 218 | 200 | 197 | 184 |
| B2 (cm) | | 12 | 12 | 13 | 13 | 11 |

Thus, only minimum amounts of fire retardant are needed to meet the requirements of the B2 test (i.e. a spread of flame less than 15 cm).

Example 5: PUR Example

The following table indicates the composition.

Table 9

| Formulation | Ref. Ex | Ex. M |
|---|---|---|
| Polyol 2 | 13.36 | 13.36 |
| Polyol 3 | 15.06 | 15.06 |

Table 9 (continued)

| Formulation | Ref. Ex | Ex. M |
|---|---|---|
| Polyol 5 | 13 | 13 |
| Polyol 6 | 2 | 2 |
| Polyol 7 | 14.31 | 14.31 |
| PEG600 | - | 4.77 |
| TCPP | 11.42 | 11.42 |
| DEEP | 5 | 5 |
| Ixol B251 | 19.08 | 19.08 |
| B 8406 | 2 | 2 |
| Polycat 43 | 0.3 | 0.3 |
| SFC | 1.1 | 1.1 |
| Water | 3.4 | 3.4 |
| Isocyanate | 171.9 | 171.9 |
| Index | 130 | 130 |

The results are summarized in the next table.

Table 10

| | Ref. Ex | Ex. M |
|---|---|---|
| Reactivity (sec) | | |
| Cream time | 15 | 15 |
| Full Cup | 32 | 32 |
| String time | 39 | 39 |
| Tack Free Time | - | - |
| End Of Rise | 75 | 75 |
| Density (kg/m$^3$) | 37 | 37 |
| Early Adhesion (N/m) | | |
| 4 min | 56 | 113 |
| 5 min | 144 | 157 |
| 6 min | 130 | 162 |
| 7 min | 125 | 104 |
| 8 min | 109 | 149 |
| 9 min | 170 | 133 |
| 10 min | 135 | 187 |
| Final Adhesion (N/m) | 300 | 350 |

The foams of the invention exhibit a remarkable improvement as far as adhesion is concerned, while the other properties of the foam are not affected.

**Claims**

1. A process for making a rigid polyurethane or urethane-modified polyisocyanurate foam comprising reacting, in the presence of a blowing agent, at least one polyisocyanate with an isocyanate-reactive composition comprising:

(a) at least one polyol having a functionality of at least 2 and an OH value above 100 mg KOH/g; and

(b) at least one polyalkyleneoxydiol having an OH value of 100 to 600 mg KOH/g, where the diol represents from 0.1 to 20% by weight of the total foam weight.

2. The process of claim 1, in which the NCO index is between 150 and 300 %.

3. The process of claim 1 or 2, in which the diol is a polyetherdiol based on ethyleneoxy and/or propyleneoxy, where the ethyleneoxy mol content is at least 50% based on total oxyalkylene units.

4. The process of any one of claims 1 to 3, in which the diol has an OH value between 150 and 400 mg KOH/g.

5. The process of any one claims 1 to 4, in which the diol is polyethyleneglycol.

6. The process of claim 5, in which the diol has a molecular weight of 600 or 300.

7. The process of any one of claims 1 to 6, in which the blowing agent comprises water.

8. The process of any one of claims 1 to 7, in which the at least one polyol (a) comprises:

   at least one polyether and at least one polyester, where the average OH value is at least 200 mg KOH/g.

9. The process of any one of claims 1 to 7, in which the at least one polyol (a) comprises:

   at least a first polyether and at least a second polyether, where the average OH value is at least 200 mg KOH/g.

10. The process of any one of claims 1 to 9, which is carried out according to the one-shot technique.

11. The process of any one of claims 1 to 9, which is a prepolymer process, where said prepolymer is obtained by reacting part or all of the diol with part of the polyisocyanate.

12. The process of any one of claims 1 to 11, in which the polyisocyanate is MDI-based.

13. The process of any one of claims 1 to 12, in which the foam is made on a metal surface to which it adheres.

14. A rigid polyurethane or urethane-modified polyisocyanurate foam obtainable by the process of any one of claims 1 to 13.

15. An isocyanate-reactive composition comprising: (a) at least one polyol having a functionality of at least 2 and an OH value above 100 mg KOH/g; (b) at least one polyalkyleneoxydiol having an OH value of 100 to 600 mg KOH/g, where the diol represents from 1 to 80% by weight of the isocyanate-reactive composition weight; and (c) optionally water.

16. The isocyanate-reactive composition of claim 15, in which the diol is as defined in any one of claims 3 to 6.

17. The isocyanate-reactive composition of claim 15 or 16, in which the at least one polyol (a) is as defined in claim 8 or 9.

18. Use, in a water-blown rigid polyurethane or urethane-modified polyisocyanurate foam, of a polyalkyleneoxydiol having an OH value of 100 to 600 mg KOH/g, where the diol represents from 0.1 to 20% by weight of the foam weight, for improving the adhesion.

19. Use according to claim 18 in polyisocyanurate foams.

**European Patent Office**

## EUROPEAN SEARCH REPORT

Application Number

EP 00 11 3735

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 36 27 236 A (BASF AG) 18 February 1988 (1988-02-18) <br><br> * column 9, line 7 - line 9; claim 1 * <br> --- | 1,3-5,7, 9,10,12, 14-17 | C08G18/40 C08G18/48 |
| A | DE 39 10 100 C (BAYER AG) 4 January 1990 (1990-01-04) <br><br> * claims 1,2,6; table * | 1-4, 7-10, 12-19 | |
| D | & US 5 350 780 A 27 September 1994 (1994-09-27) <br> ----- | | |

TECHNICAL FIELDS SEARCHED (Int.Cl.7)

C08G

The present search report has been drawn up for all claims

| Place of search | Date of completion of the search | Examiner |
|---|---|---|
| BERLIN | 24 November 2000 | Angiolini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 00 11 3735

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2000

| Patent document cited in search report | Publication date | Patent family member(s) | | Publication date |
|---|---|---|---|---|
| DE 3627236 A | 18-02-1988 | NONE | | |
| DE 3910100 C | 04-01-1990 | AT | 104995 T | 15-05-1994 |
| | | DD | 297827 A | 23-01-1992 |
| | | DE | 59005500 D | 01-06-1994 |
| | | EP | 0389881 A | 03-10-1990 |
| | | US | 5350780 A | 27-09-1994 |

EPO FORM P0459

For more details about this annex : see Official Journal of the European Patent Office, No. 12/82